# EUROPEAN PATENT APPLICATION

(11) **EP 2 642 726 A1**
(43) Date of publication of application: **25.09.2013**
(21) Application number: 12180175.7
(22) Date of filing: 10.08.2012
(51) Int. Cl.: H04L 29/08

(54) **Peer-to-peer time limited data sharing**

(30) Priority: 23.03.2012 US 201261614945 P
(71) Applicant: BlackBerry Limited, Waterloo ON N2L 3W8 (CA)
(72) Inventor: Mori, Robert Felice, Mountain View, CA 94041 (US); Steele, Jay David, Bedford, Nova Scotia B4B 0G4 (CA); Johansen, Shaun, Bedford, Noca Scotia B4B 0G4 (CA)
(74) Representative: Bryn-Jacobsen, Caelia

(57) **Abstract**

System and methods for performing time limited data sharing over peer-to-peer data connections. A sharing data communications device (100, 204) sends a data sharing invitation (512) with an end time specification to another device (206). Upon accepting the invitation, a data sharing relationship is established that will terminate at the specified end time. The invitation specifies a data set that can be shared over the data sharing relationship. The sharing data communications device is able to send the specified data set (518) to the other device until the end time or until the data sharing relationship is terminated by either device (522). In one example, the establishment and maintenance of the data sharing relationship and shared data exchange is performed by the two end user devices over a peer-to-peer data protocol without an intermediate data sharing server.

## Description

### FIELD OF THE DISCLOSURE

The present disclosure generally relates to sharing of data between devices connected by a data communications network, and more particularly to establishing time limited peer-to-peer data sharing relationships.

### BACKGROUND

Electronic data communications devices, such as smartphones, store or produce data that can be shared with other data communications devices. In one example, a data communications device that includes a geographic location device, such as a Global Positioning System (GPS) receiver, may be configured to share its geographic position with other selected devices. In another example, user contact information can be shared with other selected devices. Some data communications devices allow the device to be configured to share such information with other devices. Generally the other devices belong to friends or associates of the user and are identified by contact information such as a mobile telephone number associated with the friend's data communications device. Additional data that is able to be shared includes a state or other characteristic of a game being played on the data communications device, document editing information for a single document that is being edited on multiple devices, including the data communications device, or any other type of data.

The privacy of the user is a concern when configuring a data communications device to share data that is associated with a user. It is desired to thoroughly control the devices with which personal data is shared. In conventional systems, once a geographic location sharing application is configured to share the device's geographic position with another device, that application continues to share the device's geographic location until the data sharing is explicitly turned off. In some instances, a device may inadvertently remain configured to share geographic location data beyond a time or event when the data is intended to be shared. The device that inadvertently remains configured to share data will, for example, continue to broadcast its geographic location to other devices that were once desired to receive that information. This inadvertent continued sharing of personal information is able to adversely impact the privacy of the user's data. For example, the other device, which is continuing to receive that geographic location, may be stolen and such information becomes available to undesired persons who are now in possession of the other device.

Therefore, the privacy and desirability of sharing data between communications devices is limited by the possibility of inadvertently sharing data once a data sharing relationship is created.

### BRIEF DESCRIPTION OF THE DRAWINGS

The accompanying figures where like reference numerals refer to identical or functionally similar elements throughout the separate views, and which together with the detailed description below are incorporated in and form part of the specification, serve to further illustrate various embodiments and to explain various principles and advantages all in accordance with the present disclosure, in which:

FIG. 1 illustrates a handheld electronic communications device, in accordance with one example;

FIG. 2 illustrates a peer-to-peer data sharing configuration, according to one example;

FIG. 3 illustrates a data communications device block diagram, according to one example;

FIG. 4 illustrates a time limited data sharing relationship initiation user interface, according to one example;

FIG. 5 illustrates a time limited data sharing process, in accordance with one example;

FIG. 6 illustrates a receive device time limited data sharing process, according to one example; and

FIG. 7 is a block diagram of an example electronic device and associated components in which the systems and methods disclosed herein may be implemented.

### DETAILED DESCRIPTION

As required, detailed embodiments are disclosed herein; however, it is to be understood that the disclosed embodiments are merely examples and that the systems and methods described below can be embodied in various forms. Therefore, specific structural and functional details disclosed herein are not to be interpreted as limiting, but merely as a basis for the claims and as a representative basis for teaching one skilled in the art to variously employ the present subject matter in virtually any appropriately detailed structure and function. Further, the terms and phrases used herein are not intended to be limiting, but rather, to provide an understandable description of the concepts.

The terms "a" or "an", as used herein, are defined as one or more than one. The term plurality, as used herein, is defined as two or more than two. The term another, as used herein, is defined as at least a second or more. The terms "including" and "having," as used herein, are defined as comprising (i.e., open language). The term "coupled," as used herein, is defined as "connected," although not necessarily directly, and not necessarily mechanically. The term "configured to" describes hardware, software or a combination of hardware and software that is adapted to, set up, arranged, built, composed, constructed, designed or that has any combination of these characteristics to carry out a given function. The term "adapted to" describes hardware, software or a combination of hardware and software that is capable of, able to accommodate, to make, or that is suitable to carry out a given function. In the following discussion, "handheld" is used to describe items, such as "handheld devices," that are sized, shaped, designed or otherwise configured to be carried and operated while being held in a human hand.

Described below are systems and method that implement peer-to-peer data sharing protocols that allow data communications devices to share data with other communications devices through a time limited data sharing relationship. As used herein, peer-to-peer data sharing protocols include any data communications protocol that performs point-to-point data communications where coordination of a data transfer is not performed by a central server. In some examples, a peer-to-peer network protocol is able to utilize a central server to, for example, establish point-to-point communications links, perform packet switching and direction to provide data connectivity between two peer-to-peer communications points, or other actions. In one example, a first data communications device is able to send invitations to other data communications devices to create a time limited data sharing relationship through which shared data is able to be received from or exchanged with the first data communications device. The first data communication device is also able to send invitations to any number of other data communications devices to also send data to, receive data from, or send data to and receive data from the first data communications device. The first data communications device is able to specify what data is to be shared. The first data communications device in various examples is either able to or required to specify an end time for sharing of the specified data. The other data communications devices that receive this invitation are able to accept the invitation or reject the invitation. The other data communications devices that accept the invitation are then able to receive the shared data until the end time specified by the first communications device in the invitation. Once an invitation is accepted by another data communications device, a time limited data sharing relationship is established between the first data communications device and the other data communications device that accepts the invitation.

A first data communications device is able to invite any number of other data communications devices to receive or exchange the shared data, and any number of time limited data sharing relationships are able to be simultaneously maintained by a first data communications device initiating time limited data sharing relationships. Further, the first data communications device is able to accept any number of invitations from other data communications devices to receive the shared data from those other data communications devices, thereby providing one type of mechanism to establish and allow bi-directional exchanges of shared data between two data communications devices.

Once a time limited data sharing relationship is established, either the first data communications device or the other data communications device that is sending, receiving, or sending and receiving the shared data through the time limited data sharing relationship, is able to terminate the data sharing relationship. The time limited data sharing relationships are automatically terminated at the end time that is specified by the first data communications device that sent the invitation. After a time limited data sharing relationship has terminated, either by the request of either data communications device or after reaching the specified relationship end time, the first data communications device is able to send a new invitation to the other data communications devices to allow the other data communications devices to send, receive, or send and receive the specified shared data.

The following discussion describes time limited data sharing relationships wherein the first data communications device is sending data to another data communications device to which an invitation to share data is sent. In various examples, time limited data sharing relationships are able to be established that allow the first data communication device to only send information to the other data communications device, allow the first data communications device to only receive information from the other data communications device, or that allow the first data communications device to send information to and receive information from the other data communications device. The examples described below of sending information from a first data communications device to another data communications device is to be understood as a representative time limited data sharing relationship and the below described principles are clearly applicable to time limited data sharing relationships that allow exchanging of data over peer-to-peer communications links in any direction.

One example of shared data that is sent from a first data communications device to another data communications device is the present geographical location data of the first data communications device. Another example is data stored on the first data communications device that may be of interest or useful to a user of another data communications device, such as contact information. Any type of data stored on a data communications device, or data to which the data communications device has access, is able to be shared through a time limited data sharing relationship. Additional data that is able to be shared includes a state or other characteristic of a game being played on the data communications device, document editing information for a single document that is being edited by multiple devices, including the data communications device, or any other type of data.

The ability of a first data communications device to specify an end time for a data sharing relationship, such that the shared data is not available to the other data communications device after the end time, enhances the security of the shared data from the point of data sharing devices on either end of the time-limited data sharing relationship. A first data communications device may have configured by its user to initiate a data sharing relationship with another data communications device, but circumstances may change such that either party with data communications devices configured to take part in a time limited data sharing relationship no longer wish to share data with the remote data communications device. Examples of such changes in circumstances include a case where one of the data communications devices is lost or stolen and the user of the other data communications device does not want someone who finds or who had stolen the data communications device to know the location of his or her device. In some examples, the first data communications device, which initiates the time limited data sharing relationship, requires that an end time for each time limited data sharing relationship be specified, or at least a default duration for each data sharing invitation is used unless the relationship end time is otherwise received by the first data communications device from the user.

When initiating a time limited data sharing relationship, the first data communications device is able to specify either a duration for the time limited data sharing relationship or a specific time of day at which the time limited data sharing relationship will end. In the case of specifying a time duration for the time limited data sharing relationship, that duration is measured as starting at the time of a particular action taken by the first data communications device. In one example, the time duration that a time limited data sharing relationship lasts is measured as starting at the time the time limited data sharing invitation for that relationship is sent by the data communications device. The time duration may alternatively be started when the first data communications device receives an input from a user through a user interface that indicates that the time limited data sharing relationship is to be started. In some examples, a delay in responding to or accepting the time limited data sharing invitation by the other data communications device that receives the invitation will not extend the duration of the time limited data sharing relationship.

In one example, the time remaining in the time limited data sharing relationship is sent with each data packet containing shared data that is sent to the other data communications device receiving the shared data. The inclusion of an indicator of the time remaining for the time limited data sharing relationship in each data packet allows the data communications device to easily ascertain the time remaining for the data sharing relationship. Based upon this indicator of the time remaining for the data sharing relationship, a display indicating either an amount of time remaining for the data sharing relationship, or the time at which the data sharing relationship will terminate, is able to be accurately indicated to a user without additional processing by the receiving data communications device.

In one example, the time limited data sharing relationship is established over a peer-to-peer data communications system that allows the end user devices to perform all processing required to establish the data sharing session. The shared data is also communicated from the first data communications device to the other data communications devices using the same peer-to-peer data communications system. Using peer-to-peer data communications to establish the time limited data sharing relationship and to perform the exchange of shared data allows the end user devices to autonomously establish and maintain the shared data exchange operations. In this example, the first data communications device that is sending the shared data and the other data communications devices that are receiving the shared data perform all shared data exchange relationship management, thereby obviating the use of a central server to manage shared data exchanges. Allowing end user devices to exchange shared data without a central server reduces the infrastructure costs for shared data systems, reduces the reliance on central resources such as a central server that may introduce processing bottlenecks, and provides flexibility in the types of data sharing and the manner in which data sharing is able to be performed.

A further benefit of sharing data through the peer-to-peer data sharing relationship implemented by the following described example is improved privacy and security because data shared through a peer-to-peer data exchange is not stored on a central server or in another infrastructure related data warehouse. The sharing data through peer-to-peer data exchange mechanisms therefore cause less concern that unauthorized persons are able to access their warehoused data.

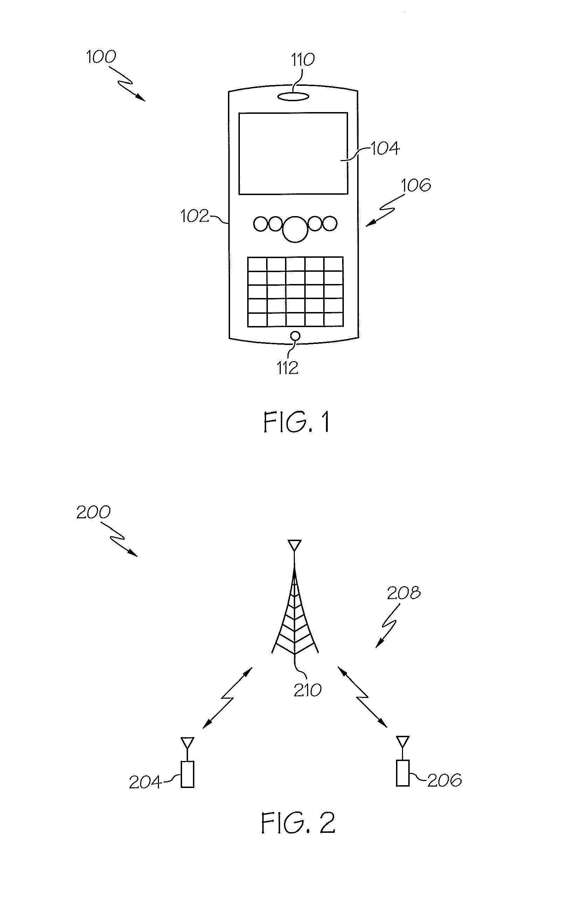

FIG. 1 illustrates a handheld electronic communications device 100, in accordance with one example. The handheld electronic communications device 100 in one example is a data communications device, or a wireless communications device, that supports exchanging data with other communications devices over one or more wireless networks. The handheld communications device of one example is a smartphone device that allows a user to make wireless voice telephone calls, exchange data messages such as text messages, e-mail messages, and other data with other data communications devices via wired or wireless data communications devices, execute applications to perform various functions, or to perform combinations of these actions.

The handheld electronic communications device 100 has a case 102 that encloses the circuitry of the handheld device and allows a user to hold the handheld device 100 in his or her hand. The handheld device 100 receives information from and provides information to a user through various user interface facilities. The illustrated handheld electronic communications device 100 has a screen 104 to display information to the user and a keyboard 106 to allow a user to enter data that is received by a processor within the handheld electronic communications device 100. In one example, the screen 104 is a touchscreen that allows a user to provide input by touching or making gestures on the screen with, for example, a finger.

The handheld electronic communications device 100 further includes an earpiece speaker 110 and a microphone 112. The earpiece speaker 110 and microphone 112 allow the handheld electronic communications device 100 to be used by a user to perform a two-way voice call. Other handheld devices are able to also include various other sound generating and receiving equipment, such as a loudspeaker (not shown).

FIG. 2 illustrates a peer-to-peer data sharing configuration 200, according to one example. The peer-to-peer sharing configuration 200 illustrates two data communications devices, a first data communications device 204 and a second data communications device 206. The peer-to-peer data sharing configuration 200 shows two data communications devices to simplify the description of this example. In general, peer-to-peer data sharing configurations are able to operate with any number of data communications devices. Although the peer-to-peer data sharing configuration 200 describes communications among data communications devices, it is clear that these data communications devices are able to also perform other functions, such as supporting voice or video communications, executing applications to allow the data communications device to perform various functions, or any combination of these functions. In one example, one or more of these data communications devices are handheld electronic communications devices 100 such as is described above with regard to FIG. 1.

These data communications devices communicate with one another over one or more data links 208. In the illustrated example, the data communications devices are mobile, handheld devices that communicate with one another and with other communications devices over wireless data links 208. The wireless data links 208 allows data to be exchanged between or among data communications devices, such as the between the first data communications device 204 and the second data communications device, through a data network infrastructure 210. The data network infrastructure 210 is represented in the peer-to-peer data sharing configuration 200. In general, a data network infrastructure is able to consist of a single base station or a number of base stations that are themselves interconnected by one or more data links. The wireless data link 208 is able to include, for example, data links used in conjunction with cellular telephone systems, data links used in wide area wireless data networks, or data links used in wireless local area networks.

In one example, each data communications device is able to be configured to share data with other data communications devices. In the following description, a configuration in which one data communications device is able to share data with one or more other data communications devices is referred to as a data sharing relationship. In the following description, a data communications device is able to set up a data sharing relationship with another data communications device to share a selected data set. A data set in this context is able to consist of, for example, a single data item, a temporal sequence of changing data for one or more data items, a combination of data items, any information that is able to be communicated between two devices, or any combination of these. In setting up a data sharing relationship, the first data communications device receives an input from a user that indicates one or more other data communications device or devices that are invited to receive a shared data set. The first data communications device, which is initiating the data sharing relationship, also specifies a time duration for the data sharing relationship. This time duration is able to be a default value or a value received through a user interface. At the end of that specified time duration, data is no longer shared between the two data communications devices. The first data communications device, which is initiating the data sharing relationship, is also able in some examples to select which data set or data sets are to be shared, as is described below.

As an illustrative example, the first data communications device 204 is able to receive input from a first user through a user interface that selects or indicates a data communications device with which data is to be shared. In one example, the selected or indicated data communications device is associated with a particular user, referred to in this example as a second user, and the information received from the first user is an indication of that particular user. The first data communications device 204 is further able to receive an input from the first user through a user interface that designates a specified data set that can be shared with the data communications device that is associated with that particular user. For purposes of illustration in this example, the second data communications device 206 is the device associated with the particular user, and is the data communications device with which the first data communications device 204 is able to share the specified data set.

In one example, the first data communications device 204 is able to receive an input from the first user indicating data sets for the selected data set that is able to be shared with the second data communications device 206. The first data communications device 204 is able to send an invitation to the second data communications device 206. In one example, the second data communications device 206 is able to indicate to its user in response to the receipt of this invitation that the first user, who is associated with the first data communications device, wishes to share the selected data set with the second user. In this example, the first data communications device 204 is an initiating device because it is sending the invitation. The second data communications device 206 is the receiving device because it is receiving the invitation. In one example, this invitation is formatted as a text message that is communicated from the first data communications device 204 to the second data communications device 206. In one example, the text message is communicated via a Short Messaging Service (SMS) text messaging communications protocol.

The invitation to establish a data sharing relationship is able to include an indication of an end time for the data sharing relationship. The end time for the data sharing relationship is a time specification that specifies a unique day and time of day at which the data sharing relationship is to end. The end time for a data sharing relationship is able to be specified by any suitable technique. In one example, the end time is specified as a duration over which the time limited data sharing relationship will last. For example, the end time is able to be specified as a number of minutes, seconds, or milliseconds that the time limited data sharing relationship will last. A device receiving a message with this time duration is able to, for example, calculate the end time of the time limited data sharing relationship based upon the time reported by that device's clock. Such a relative time specification eliminates a lack of synchronization due to clock differences between sending and receiving devices. In another example, the end time is able to be specified in a manner that specifies a unique time of day and date. In a particular example, the end time is able to be specified as a unique time that is relative to a time epoch used by devices sharing data. In one example, a time epoch of midnight, January 1, 1970 is used, and end times are specified as an amount of time after that time epoch, i.e., the amount of time between midnight, January 1, 1970, and the end time.

Upon receiving this invitation the second data communications device 206 is able to accept or reject the invitation. In one example, the second data communications device 206 is able to present a user interface display that presents the contents or particulars of the data sharing invitation and that allows the second data communications device 206 to receive an input from its user that indicates whether the invitation should be accepted or rejected. In response to receiving the user's input, the second data communications device is able to accept or reject the invitation.

When the second data communications 206 device rejects the invitation, the second data communications device 206 is able to either not respond to the received invitation message, or the second data communications device 206 is able to send a message to the first data communications device 204 that explicitly rejects the invitation. In various examples, the first data communications device 204, which sends the invitation, is able to be configured to interpret no response, an explicit rejection response, or either, as an indication of a rejection by the second data communications device 206, which receives the invitation. These configurations similarly apply to other data communications devices that participate in a particular time limited data sharing relationship protocol. Once the data sharing relationship end time specified in the data sharing invitation has passed, however, the second data communications device 206 is not able to receive the shared data by, for example, responding with an acceptance of the invitation.

When the second data communications device accepts the invitation, the second data communications device 206 in one example sends an acceptance message to the first data communications device 204 and the data sharing relationship is established. In further examples, an explicit acceptance message is not required to establish a data sharing relationship. Once the data sharing relationship is established, the first data communications device 204 shares the selected data set with the second data communications device 206.

In one example, the sharing of the selected data set is performed in response to a request for the data set that is sent from the second data communications device 206 to the first data communications device 204. When the first data communications device 204 receives the request, it sends all or part of the shared data set to the second data communications device 206. In other examples, the first data communications device 204 automatically sends all or part of the shared data set to the second data communications device 206 without a specific request by the second data communications device 206. The shared data set is able to be automatically sent either on a scheduled basis or upon a change of the information contained in part or all of the shared data set.

In one example, each message containing shared data sets that is sent from the first data communications device 204 to the second data communications device 206 also contains a specification of the time remaining until the end time of the shared data relationship. In one example, each message contains the number of milliseconds remaining until the end of the shared data session. Upon reaching the end time of the shared data session, the second data communications device 206 changes its status for that shared data relationship to terminated. The second data communications device 206 is also able to provide a notification of the termination of that data sharing relationship to its user.

In order to simplify the present description, the initiating, establishing, maintaining, and terminating of one data sharing relationship of data being shared from the first data communications device 204 to the second data communications device 206 is described. In general, each data communications device is able to concurrently maintain a number of data sharing relationships between itself and many other data communications devices through a data communications link. Further, although the description focuses on sharing of data from the first data communications device 204 to the second data communications device 206, it is also possible for the second data communications device to establish another data sharing relationship with the first data communications device 204 such that shared data on the second data communications device is also sent to the first data communications device. The shared data relationship under which shared data is sent from the second data communications device 206 to the first data communications device 204 is able to operate concurrently, at different times, or both, with a data sharing relationship under which shared data is sent from the first data communications device 204 to the second data communications device 206.

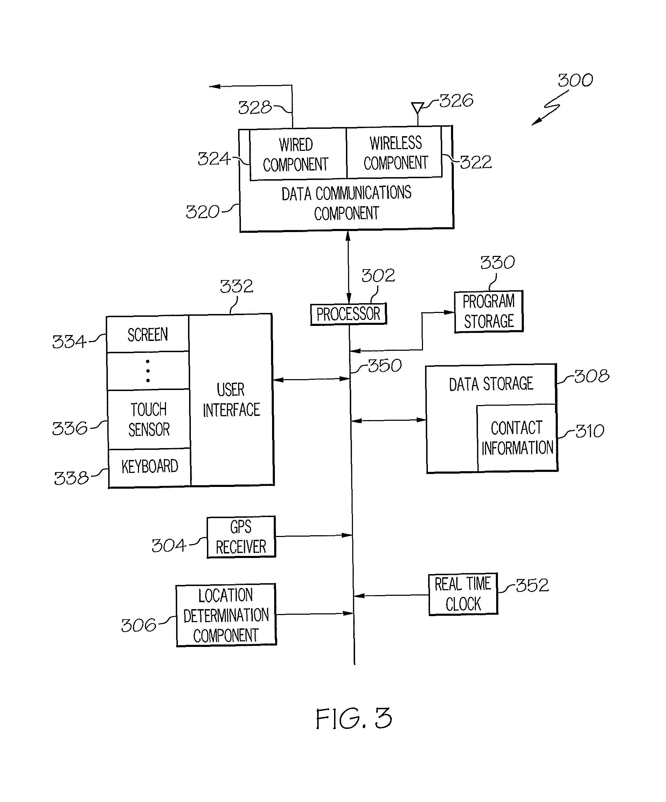

FIG. 3 illustrates a data communications device block diagram 300, according to one example. The data communications device block diagram 300 depicts some of the components included in a data communications device that is able to be used in association with the systems and methods described herein. The handheld electronic data communications device 100, described above with regards to FIG. 1, is one example of a data communications device with components depicted in the data communications device block diagram 300. The data communications device block diagram 300 depicts components within a data communications device that is able to share data with other data communications devices over a data communications network. Various data communications devices are able to include other components that are used to augment the functions performed by the below described components or that provide additional functionality.

The data communications device block diagram 300 depicts a processor 302 that performs processing to control the operation of its data communications device and to implement functions performed by its data communications device. In one example, the processor 302 includes a data sharing processor, as is described below. The processor 302 communicates with various components through a data bus 350. The processor 302 is controlled by programs stored in a program storage 330 and is able to store and retrieve information from a data storage 308. Data storage 308 in one example stores user contact information 310. User contact information 310 includes information such as telephone numbers, mailing addresses, e-mail addresses, and the like, for each entry, such as a user of a data communications device.

The processor 302 is also able to receive a geographical or other location from a GPS receiver 304, a location determination component 306, or both. Location determination component 306 is able to determine a physical location of a data communications device by different techniques, such as time difference of arrival (TDOA) processing of signals received from different physical locations. In one example, the location determination component 306 is able to be used in-doors or in other areas where use of a GPS receiver 304 is not practical. Geographical or other location data for the data communications device is one type of data that is able to be shared in a peer-to-peer data sharing relationship. Other data is also able to be shared through peer-to-peer data sharing relationships, such as data describing the status or other characteristics of a game being played on the data communications device, the status of a single document that is being edited by two or more devices where one device is the data communications device, or any other type of data.

The processor 302 is able to receive time of day information from a real time clock 352. Real time clock 352 is used in one example to determine if the end time of a data sharing relationship has passed. In an initiating device, the real time clock 352 is used to determine the time of initiating a shared data relationship, and to determine how much time has elapsed since the initiation of the shared data relationship. The processor 302 is further able to access the real time clock 352 to determine how much time is left until the end time of a data sharing relationship.

The processor 302 is able to accept user inputs from and provide information to a user interface 332. Information retrieved from various sources or that is generated by the processor 302 is able to be displayed on a screen 334. User inputs are able to be received as a result of a user's operating a keyboard 338 or a touch sensor 336. In one example, the touch sensor 336 is part of the screen 334 and allows user input to be provided by a user's touching graphical objects displayed on the screen 334. In another example, the touch sensor 336 may be a stand-alone input device, such as an optical navigation module, joystick, trackball, button or other navigation device.

The processor 302 is able to exchange data with remote data communications devices through a data communications component 320. The data communications component 320 includes a data transmitter and a data transmitter, as is described in detail below. The illustrated data communications component 320 includes both a wireless data communications component 322 and a wired data communications component 324. Either or both of the wired communications component 324 and the wireless data component 322 are able to establish a data communications link to a remote data communications device. The wired data communications component 324 is able to exchange data over a wired communications link 328, such as an Ethernet based wired communications link. Other types of wired data communications links between data communications devices are also able to be used.

The wireless data communications component 322 transmits and receives data communications signals through one or more antennas 326. In some examples, the wireless data communications component 322 implements data communications over a wireless data communications protocol, such as are used by cellular telephone networks, Wireless Local Area Networks (WLAN), and the like.

The data communications component 320 is able to communicate data through various protocols. In one example, the data communications component is able to communicate data packets over a data messaging systems. In one example, data packets are able to be exchanged between data communications devices through a peer-to-peer data messaging system. As is discussed below, data sharing relationships and the exchange of shared data between two or more data communications devices is performed by using peer-to-peer messaging to directly exchange data packets without using an intermediate server.

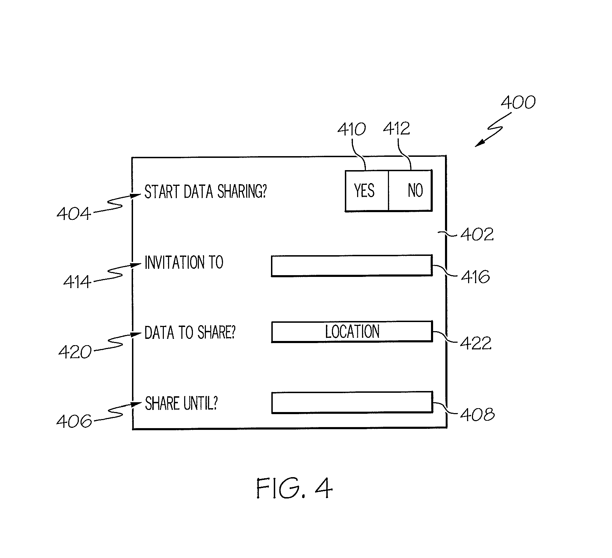

FIG. 4 illustrates a time limited data sharing relationship initiation user interface 400, according to one example. The time limited data sharing relationship initiation user interface 400 depicts a user interface that is displayed by a user's device, such as on the display 104 of the handheld electronic communications device 100 or the screen 334 that are described above, when the data communications device is operating to initiate a data sharing relationship with another device. The following description refers to the data communications device block diagram 300 discussed above with regards to FIG. 3 as an example implementation for illustration purposes. Further device architectures are able to be used in conjunction with the time limited data sharing relationship initiation user interface 400 or with similar user interfaces. In one example, the data communications device displays the time limited data sharing relationship initiation user interface 400 in response to receiving an input from its user that indicates a desire to initiate a time limited data sharing relationship with another device.

The time limited data sharing relationship initiation user interface 400 shows a user display portion 402 that includes a start prompt 404 reading "START DATA SHARING?" to allow a user to provide an input indicating that a data sharing relationship with another device is to be started. Adjacent to the start prompt 404 is a "YES" button 410 and a "NO" button 412.

In this example, the "YES" button 410 and the "NO" button 412 are touch screen graphical user interface elements that receive an input indicating that a function associated with that element is to be initiated. In one example, this input is received by a user's touching, in the vicinity of the button, the screen displaying the element. In one example of using the time limited data sharing relationship initiation user interface 400, a user is able to complete the information in the fields below the start prompt 404 and press the "YES" button 410 to indicate that the data communications device is to send a data sharing invitation to a remote data communications device. In this example of using the time limited data sharing relationship initiation user interface 400, the user's pressing of the "NO" button 412 causes the data communications device to discard the information entered into other areas of the time limited data sharing relationship initiation user interface 400 and to present a different display (not shown) to the user. In further examples, different user interface equipment, such as physical buttons, voice commands, or other user input modalities, are able to be used to perform the selection of the function represented by the "YES" button 410 and the "NO" button 412.

The time limited data sharing relationship initiation user interface 400 also includes a receiving device prompt 414 reading "INVITATION TO" that is followed by a receiving device input box 416. In general, the receiving device input box 416 includes a user interface (not shown) to receive an input that indicates a selected device, which may be presented as a name or other indication of a user associated with that device, with whom data is to be shared. In one example, in response to receiving an input from the receiving device input box 416 such as by a user's tapping of the receiving device input box 416, the device displays data reflecting entries in the user's contact list, such as is stored in the contact information 310 described above, who have data communications devices with which data can be communicated. In another example, the receiving device input box 416 is able to receive a contact name or telephone number that can be entered into the input box using user interface input facilities of that device, such as a physical or virtual keyboard.

A data set prompt 420 reading "DATA TO SHARE" is displayed adjacent to a data set input box 422. The data set input box receives an input reflecting a selection of which data set is to be shared with the receiving device specified in the receiving device input box 416. The illustrated data set input box 422 displays "LOCATION" indicating that the data sharing relationship is to share a description of the physical location of the user's device. In one example, the physical location is a latitude and longitude value of the user's device as determined by the GPS receiver 304. In such an example, receiving an input indicating the selection of location data allows the location of the electronic device displaying the time limited data sharing relationship initiation user interface 400 to send its present location, as is determine by a GPS receiver 304 in one example, to the receiving device specified in the receiving device input box 416.

In one example, the data set input box 422 receives an input that indicates a selection between sharing location data and sharing contact data with the remote data communications device. The contact data in one example is stored in the contact information 310. When sharing contact data, the data communications device will allow the other data communications device to access some or all of the contact information stored in the contact information 310. In one example, an input is able to be received that specifies whether the particular contact information item of each contact entry, i.e., each name or contact data item, in the contact information 310 is to be shared with remote data communications devices. In such an example, the remote device with which the device has a time limited data sharing relationship is able to access only the contact information that is indicated in the contact information 310 as able to be shared. Information describing a state or characteristic of a game, document editing information, or any other type of information is also able to be specified through the data set input box 422.

A time duration prompt 406 reading "SHARE UNTIL?" is presented on the user display portion 402 and is followed by a time duration input box 408. The time duration input box 408 receives an input that indicates a time limited data sharing relationship end time, which is a time at which a time limited data sharing relationship will end. In one example, the input received through the time duration input box 408 is able to indicate a time duration or a specific time of day. In one example, a selection of the time duration input box 408, such as is received in response to a tapping on a touch screen or using screen navigation tools to select the time duration input box 408, causes a calendar and clock graphical user interface (not shown) to be displayed to facilitate a user's selection of a date and time at which the time limited data sharing relationship is to end. The time duration input box 408 is also able to receive either specific time of day values for the end time of the time limited data sharing relationship, or a specification of a relative time from the time that the time limited data sharing relationship is initiated. In one example, a default time duration is able to be automatically included in the displayed time duration input box 408, such as a specification of "1 Hour" or a specific time that corresponds to one hour from the time the time limited data sharing relationship initiation user interface 400 is displayed. An input is able to be received from a user that indicates either using the default time duration without modification, or that indicates a change of the value within the time duration input box 408 to a desired time at which sharing the selected data is to stop.

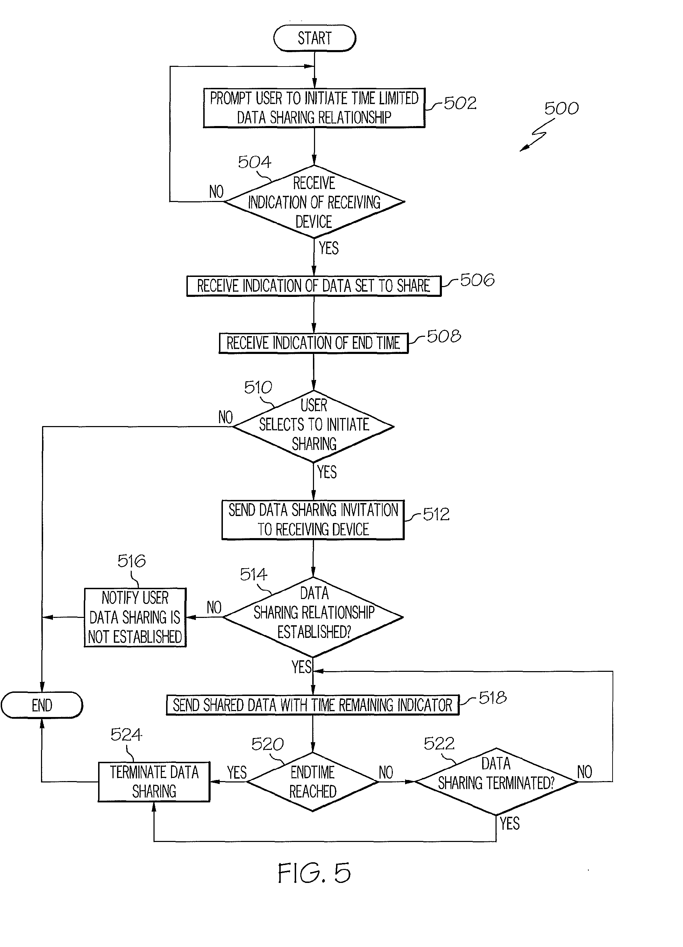

FIG. 5 illustrates a time limited data sharing process 500, in accordance with one example. The above described time limited data sharing relationship initiation user interface 400 is an example of a user interface presented by a data communications device to receive input from a user in support of the time limited data sharing process 500. The following description refers to portions of the time limited data sharing relationship initiation user interface 400 described above with regards to FIG. 4. In further examples, data communications devices are able to implement other user interface mechanisms to receive input in support of the time limited data sharing process 500.

The time limited data sharing process 500 begins by prompting, at 502, the user of a device to initiate a time limited data sharing relationship. The above described time limited data sharing relationship initiation user interface 400 is an example of this prompting. In further examples, other user interface mechanisms are used to provide this prompt.

The time limited data sharing process 500 continues by receiving, at 504, an indication of the receiving device that is to receive a time limited data sharing invitation. A user's entering contact information into the receiving device input box 416 for a person whose device is to receive the time limited data sharing invitation is an example of receiving this information. The time limited data sharing process 500 continues by receiving, at 506, an indication of the data set that is to be shared through the time limited data sharing relationship. A user's entering data into the data set input box 422 is an example of receiving this information. The time limited data sharing process 500 continues by receiving, at 508, an indication of the ending time of the time limited data sharing relationship. A user's entering a specification of the ending time into the time duration input box 408 is an example of receiving this information.

The time limited data sharing process 500 continues by determining, at 510, if the user selects to initiate the time limited data relationship. A user's pressing the "YES" button 410 is an example of a user's selecting to initiate the time limited data sharing relationship. In that example, this determination is made based upon inputs received, such as through user interface elements, that indicate this selection. In one example, one or more of the above user inputs are a user input indicating initiation of a time limited data sharing relationship. If it is determined that the user did not select to initiate the relationship, the time limited data sharing process 500 ends.

If it is determined, at 510, that the user selects to initiate the time limited data sharing relationship, a time limited data sharing invitation message is sent, at 512, to the specified receiving device. In one example, determining that the user selects to initiate the time limited data sharing relationship is performed by an operation of a data sharing processor configured to receive a user input indicating initiation of a time limited data sharing relationship, and operation of a data transmitter configured to send the invitation to share data in response to receiving the user input. In one example, the time limited data sharing invitation message is an invitation to share data within a data set that is contained in a formatted message sent from the user's device, i.e., the initiating device, over a peer-to-peer messaging interface to the receiving device. In one example, the initiating device includes a data sharing processor that sends the time limited data sharing invitation message through the above described data communications component 320 over either a wired or wireless data communications link.

The time limited data sharing process 500 continues by determining, at 514, if the time limited data sharing relationship is to be established. In one example, the receiving device to which the time limited data sharing invitation is sent is required to respond with an acceptance message before the specified end time of the time limited data sharing relationship in order to cause the time limited data sharing relationship to be established. In one example, this determining includes an operation of data receiver configured to receive, in response to the sending the invitation, an invitation acceptance from the receiving device, and a data transmitter configured to send the data set in further response to receiving the invitation acceptance. In one example, the relationship end time is independent of a time of sending the invitation acceptance. In other words, the end time of the time limited data sharing relationship is determined by the time indicated in the invitation, and any delay in responding to the invitation with an invitation acceptance message does not change or affect the time limited data sharing end time. For example, sending an invitation acceptance, in an example requiring an invitation acceptance, after the relationship end time results in a failure to establish a limited data sharing relationship.

Other criteria are able to be used to determine that the time limited data sharing relationship is to be established. If it is determined that the time limited data sharing relationship is not to be established, the data communications device notifies, at 516, the user that the time limited data sharing relationship is not established. The time limited data sharing process 500 then ends.

If it is determined, at 514, that the time limited data sharing relationship is to be established, the time limited data sharing process 500 continues by sharing the specified shared data, at 518. The sharing of shared data is generally performed by sending a data set that consists of the shared data from the initiating device to the receiving device during the time of the time limited data sharing relationship. In one example, the data set that consists of the shared data is sent in a packet that also includes an indication of time remaining until the end time of the time limited data sharing relationship, which is able to be, for example, a specification of the amount of time remaining or a reiteration of the end time. The sending of the shared data is able to be performed in response to a request sent from the receiving device for a data set that includes the shared data, or the initiating device is able to automatically send the shared data in response to a request to send the data set consisting of the shared data that is generated within the initiating device, such as by a process that triggers sending the shared data on a scheduled basis or as information within the shared data changes. In one example, the sharing the specified shared data is an example of an operation of a data sharing processor that is configured to determine that a receipt of a request to send the data set consisting of the shared data occurs before the relationship time, and the operation of a data transmitter configured to send the data set to the receiving device in response to a determination that the receipt of the request to send the data set occurs before the relationship end time. This is further an example of an operation of a data receiver configured to receive, from a receiving device, a message comprising the request to send the data set, and an operation of a data transmitter is further configured to send the data set in further response to receiving the message from the receiving device.

The time limited data sharing process 500 continues by determining, at 520, if the end time for the time limited data sharing relationship is reached. The relationship end time is generally received in an input from the user of the initiating device, but other sources of the end time value are able to be used. If it is determined that the end time of the time limited data sharing relationship has not been reached, a determination, at 522, of whether the time limited data sharing relationship has been selected to be terminated is made. In one example, either the initiating device or the receiving device is able to terminate the time limited data sharing relationship. In one example, a data communications device includes a data sharing processor configured to terminate the time limited data sharing relationship in response to receiving an input, such as from a user, indicating that the relationship is to be terminated. In one example, the device terminating the time limited data sharing relationship sends a data message to the other device specifying that the time limited data sharing relationship is to be terminated. When it is determined that the time limited data sharing relationship is not to be terminated, the time limited data sharing process 500 returns to sharing, at 518, the shared data. In one example, this returning to sharing is an example of a data transmitter that is configured to send in further response to a determination that the time limited data sharing relationship is not terminated.

When it is determined that either the end time of the time limited data sharing relationship has been reached, at 520, or that the time limited data sharing is to be terminated, at 522, the time limited data sharing relationship 500 is terminated, at 524. In one example, the initiating device stops providing the shared data to the receiving device in response to terminating the time limited data sharing relationship. This is an example of an operation of a data sharing processor configured to reject, in response to not determining the receipt of the request to send the data set occurs before the relationship end time, the request to send the data set to the receiving device. Further, the receiving device is able to update the time limited data sharing relationship status as terminated. In response to terminating the time limited data sharing relationship, the data sharing device in one example is able to notify the user of the termination of the time limited data sharing relationship through, for example, a user interface display.

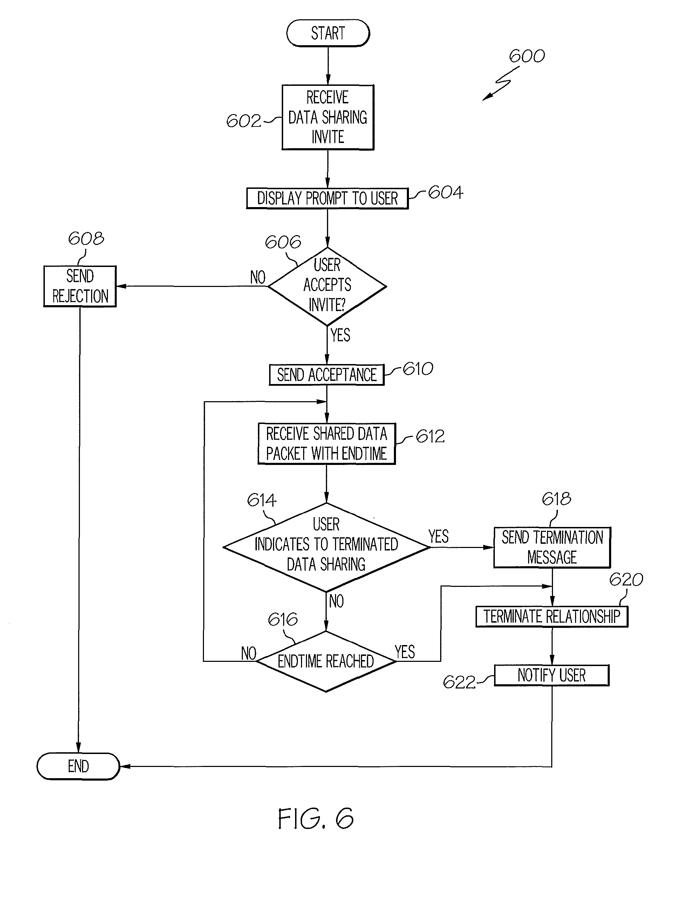

FIG. 6 illustrates a receive device time limited data sharing process 600, according to one example. The receive device time limited data sharing process 600 is performed by a data communications device that is a recipient of a time limited data sharing invitation. With reference to the scenario described above using the example of the peer-to-peer data sharing configuration 200, the receive device time limited data sharing process 600 is performed by the second data communications device 206.

The receive device time limited data sharing process 600 begins by receiving, at 602, a time limited data sharing invitation. As described above, a data communications device is able to invite other data communications devices to establish a time limited data sharing relationship by sending a data sharing invitation to a receiving device. In one example, upon receipt of the time limited data sharing invitation, the receiving device displays, at 604, a prompt to the user to accept or reject the data sharing invitation. This prompt is also able to serve as a notification to the user of that device of the receipt of the data sharing invitation. In one example, the receiving device is able to display a prompt that presents information describing the proposed time limited data sharing relationship defined in the time limited data sharing invitation. In one example, the prompt presents a description of the initiating device, such as a name of a contact with which the device is associated, the end time or duration of the proposed data sharing relationship, and the type of data to be shared. The receiving device generally also has user input facilities, such as a touch screen, function keys, or the like, that receives inputs from a user that indicate if the user wishes to accept or reject the proposed time limited data sharing relationship.

The receiving device time limited data sharing process 600 continues by determining, at 606, if an indication has been received which indicates that the user of the receiving device accepts the time limited data sharing invitation. If an input is not received that indicates that the user accepts the time limited data sharing invitation, the receiving device sends, at 608, a rejection message back to the initiating device. Not receiving an input that indicates that the user accepts the invitation is able to include, for example, receiving an input that is an explicit indication to not accept the invitation, or may be simply be not receiving any input from the user. As discussed above, some examples do not send an explicit rejection message to the initiating device, which is the data communications device that sent the invitation. After sending the rejection message, the receiving device time limited data sharing process 600 ends.

If it is determined that the user decides, at 606, to accept the data sharing invitation, the receiving device sends, at 610, an acceptance message to the initiating data communications device. In one example, determining that the user decides to accept the data sharing invitation is able to be based upon receiving an input from the user that indicates an acceptance of the invitation. After sending the acceptance message, the receiving device time limited data sharing process 600 continues by receiving, at 612, shared data from the initiating device. In one example, the shared data is communicated from the initiating device to the receiving device by peer-to-peer data messaging protocols. In one example, each data message sent by the initiating device that contains shared data also contains an indication of the end time for the time limited data sharing relationship. In various examples, each data message is able to include, for example, the number of minutes remaining in the time limited data sharing relationship, a time of day of the end time of the time limited data sharing relationship, or any other type of indication of that end time.

The receiving device determines, at 614, if the user indicated that the time limited data sharing relationship should be terminated. In one example, a determination of whether the user indicates termination of the time limited data sharing relationship is based upon receiving an input, before the end time that is specified by the initiating device, that indicates that the user wishes to terminate a time limited data sharing relationship. This input is able to be received through, for example, a user interface of the receiving device.

If it is determined that the user did not indicate that the time limited data sharing relationship should be terminated, the receiving device time limited data sharing process 600 continues by determining, at 616, if the end time for the time limited data sharing relationship has been reached. If the end time has not been reached, the receiving device time limited data sharing process 600 returns to receiving, at 612, shared data as is described above.

If the user indicated, at 614, that the time limited data sharing relationship should be terminated, the receiving device sends, at 618, a data sharing relationship termination message to the initiating device. After sending the data sharing relationship termination message, or if it was determined, at 616, that the end time was reached, the receiving device time limited data sharing process 600 proceeds to terminate, at 620, the time limited data sharing relationship. In various examples, terminating the time limited data sharing relationship includes updating a data sharing relationship status stored in the receiving device. A data message indicating termination of the data sharing relationship is also able to be sent to the initiating device. The receiving device time limited data sharing process 600 continues by notifying, at 622, the user of the termination of the data sharing relationship. This notification is able to be through, for example, a user interface display or other status message produced by the receiving device. The receiving device time limited data sharing process 600 then ends.

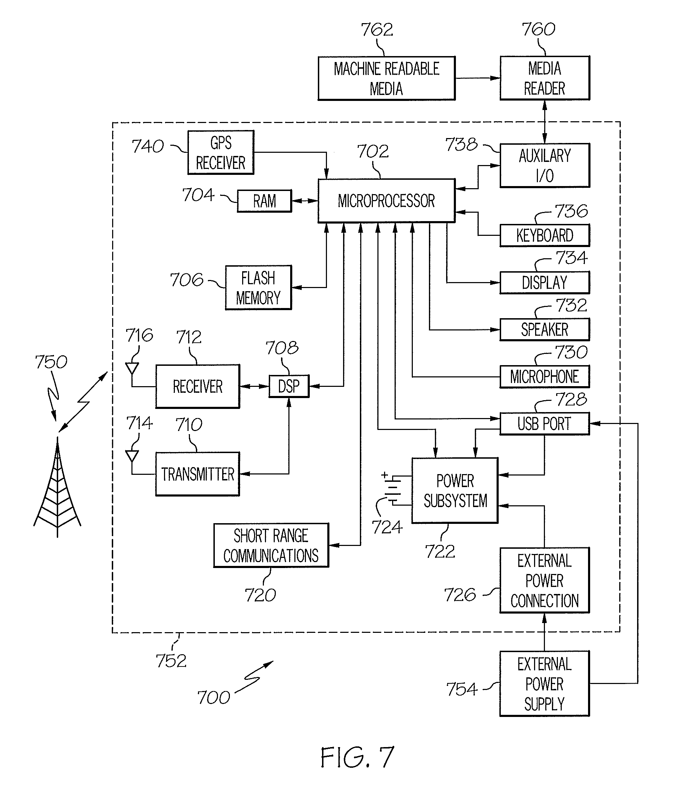

FIG. 7 is a block diagram of an electronic device and associated components 700 in which the systems and methods disclosed herein may be implemented. In this example, an electronic device 752 is a wireless two-way communication device with voice and data communication capabilities. Such electronic devices communicate with a wireless voice or data network 750 using a suitable wireless communications protocol. Wireless voice communications are performed using either an analog or digital wireless communication channel. Data communications allow the electronic device 752 to communicate with other computer systems via the Internet. Examples of electronic devices that are able to incorporate the above described systems and methods include, for example, a data messaging device, a two-way pager, a cellular telephone with data messaging capabilities, a wireless Internet appliance or a data communication device that may or may not include telephony capabilities.

The illustrated electronic device 752 is an example electronic device that includes two-way wireless communications functions. Such electronic devices incorporate communication subsystem elements such as a wireless transmitter 710, a wireless receiver 712, and associated components such as one or more antenna elements 714 and 716. A digital signal processor (DSP) 708 performs processing to extract data from received wireless signals and to generate signals to be transmitted. The particular design of the communication subsystem is dependent upon the communication network and associated wireless communications protocols with which the device is intended to operate.

The electronic device 752 includes a microprocessor 702 that controls the overall operation of the electronic device 752. The microprocessor 702 interacts with the above described communications subsystem elements and also interacts with other device subsystems such as flash memory 706, random access memory (RAM) 704, auxiliary input/output (I/O) device 738, USB Port 728, display 734, keyboard 736, speaker 732, microphone 730, a short-range communications subsystem 720, a Global Positioning System (GPS) receiver 740, a power subsystem 722, and any other device subsystems.

A battery 724 is connected to a power subsystem 722 to provide power to the circuits of the electronic device 752. The power subsystem 722 includes power distribution circuitry for providing power to the electronic device 752 and also contains battery charging circuitry to manage recharging the battery 724. The power subsystem 722 includes a battery monitoring circuit that is operable to provide a status of one or more battery status indicators, such as remaining capacity, temperature, voltage, electrical current consumption, and the like, to various components of the electronic device 752.

The USB port 728 further provides data communication between the electronic device 752 and one or more external devices. Data communication through USB port 728 enables a user to set preferences through the external device or through a software application and extends the capabilities of the device by enabling information or software exchange through direct connections between the electronic device 752 and external data sources rather then via a wireless data communication network. In addition to data communication, the USB port 728 provides power to the power subsystem 722 to charge the battery 724 or to supply power to the electronic circuits, such as microprocessor 702, of the electronic device 752.

Operating system software used by the microprocessor 702 is stored in flash memory 706. In one example, data that can be shared with other devices, such as user contact information, is also stored in flash memory 706. Further examples are able to use a battery backed-up RAM or other non-volatile storage data elements to store operating systems, other executable programs, data, or combinations of these. The operating system software, device application software, or parts thereof, are able to be temporarily loaded into volatile data storage such as RAM 704. Data received via wireless communication signals or through wired communications are also able to be stored to RAM 704.

The GPS receiver 740 provides the present geographical location of the electronic device 752. In one example, the user of the electronic device is able to share the present geographic location as determined by the GPS receiver 740 with other devices. Further information, such as user contact information stored in Flash memory 706 is also able to be shared with other devices. In one example, the processor 702 implements a peer-to-peer data communications protocol with other data communications devices, and manages time limited shared data relationships as is described above.

The microprocessor 702, in addition to its operating system functions, is able to execute software applications on the electronic device 752. A predetermined set of applications that control basic device operations, including at least data and voice communication applications, is able to be installed on the electronic device 752 during manufacture. Examples of applications that are able to be loaded onto the device may be a personal information manager (PIM) application having the ability to organize and manage data items relating to the device user, such as, but not limited to, e-mail, calendar events, voice mails, appointments, and task items.

Further applications may also be loaded onto the electronic device 752 through, for example, the wireless network 750, an auxiliary I/O device 738, USB port 728, short-range communications subsystem 720, or any combination of these interfaces. Such applications are then able to be installed by a user in the RAM 704 or a non-volatile store for execution by the microprocessor 702.

In a data communication mode, a received signal such as a text message or web page download is processed by the communication subsystem, including wireless receiver 712 and wireless transmitter 710, and communicated data is provided the microprocessor 702, which is able to further process the received data for output to the display 734, or alternatively, to an auxiliary I/O device 738 or the USB port 728. A user of the electronic device 752 may also compose data items, such as e-mail messages, using the keyboard 736, which is able to include a complete alphanumeric keyboard or a telephone-type keypad, in conjunction with the display 734 and possibly an auxiliary I/O device 738. Such composed items are then able to be transmitted over a communication network through the communication subsystem.

For voice communications, overall operation of the electronic device 752 is substantially similar, except that received signals are generally provided to a speaker 732 and signals for transmission are generally produced by a microphone 730. Alternative voice or audio I/O subsystems, such as a voice message recording subsystem, may also be implemented on the electronic device 752. Although voice or audio signal output is generally accomplished primarily through the speaker 732, the display 734 may also be used to provide an indication of the identity of a calling party, the duration of a voice call, or other voice call related information, for example.

Depending on conditions or statuses of the electronic device 752, one or more particular functions associated with a subsystem circuit may be disabled, or an entire subsystem circuit may be disabled. For example, if the battery temperature is low, then voice functions may be disabled, but data communications, such as e-mail, may still be enabled over the communication subsystem.

A short-range communications subsystem 720 provides for data communication between the electronic device 752 and different systems or devices, which need not necessarily be similar devices. For example, the short-range communications subsystem 720 includes an infrared device and associated circuits and components or a Radio Frequency based communication module such as one supporting Bluetooth^{®} communications, to provide for communication with similarly-enabled systems and devices, including the data file transfer communications described above.

A media reader 760 is able to be connected to an auxiliary I/O device 738 to allow, for example, loading computer readable program code of a computer program product into the electronic device 752 for storage into flash memory 706. One example of a media reader 760 is an optical drive such as a CD/DVD drive, which may be used to store data to and read data from a computer readable medium or storage product such as computer readable storage media 762. Examples of suitable computer readable storage media include optical storage media such as a CD or DVD, magnetic media, or any other suitable data storage device. Media reader 760 is alternatively able to be connected to the electronic device through the USB port 728 or computer readable program code is alternatively able to be provided to the electronic device 752 through the wireless network 750.

Information Processing System

The present subject matter can be realized in hardware, software, or a combination of hardware and software. A system can be realized in a centralized fashion in one computer system, or in a distributed fashion where different elements are spread across several interconnected computer systems. Any kind of computer system - or other apparatus adapted for carrying out the methods described herein - is suitable.

The present subject matter can also be embedded in a computer program product, which comprises all the features enabling the implementation of the methods described herein, and which - when loaded in a computer system - is able to carry out these methods. Computer program in the present context means any expression, in any language, code or notation, of a set of instructions intended to cause a system having an information processing capability to perform a particular function either directly or after either or both of the following a) conversion to another language, code or, notation; and b) reproduction in a different material form.

Each computer system may include, inter alia, one or more computers and at least a computer readable medium allowing a computer to read data, instructions, messages or message packets, and other computer readable information from the computer readable medium. The computer readable medium may include computer readable storage medium embodying non-volatile memory, such as read-only memory (ROM), flash memory, disk drive memory, CD-ROM, and other permanent storage. Additionally, a computer medium may include volatile storage such as RAM, buffers, cache memory, and network circuits.

Non-Limiting Examples

Although specific embodiments of the subject matter have been disclosed, those having ordinary skill in the art will understand that changes can be made to the specific embodiments without departing from the spirit and scope of the disclosed subject matter. The scope of the disclosure is not to be restricted, therefore, to the specific embodiments, and it is intended that the appended claims cover any and all such applications, modifications, and embodiments within the scope of the present disclosure.

## Claims

1. A method of establishing a peer-to-peer, time limited data sharing relationship, the method comprising:
sending, from an initiating device to a receiving device, an invitation to share data within a data set, the data set being accessible to the initiating device, the invitation comprising an indication of a relationship end time (512);
determining that a receipt of a request to send the data set occurs before the relationship end time (520); and
sending the data set to the receiving device in response to determining the receipt of the request to send the data set occurs before the relationship end time (518).

2. The method of claim 1, wherein the sending the data set further comprises sending the data set in a packet further comprising an indication of time remaining until the relationship end time.

3. The method of any of claims 1 or 2, further comprising:
receiving, prior to the relationship end time, an indication to terminate a time limited data sharing relationship(522); and
terminating, in response to receiving the indication to terminate the time limited data sharing relationship (524), and
wherein the sending is further in response to a determination that the time limited data sharing relationship is not terminated (518).

4. The method of any of claims 1, 2, or 3, further comprising rejecting, in response to not determining the receipt of the request to send the data set occurs before the relationship end time, the request to send the data set to the receiving device.

5. The method of any of claims 1, 2, 3, or 4, wherein the request to send the data set is generated within the initiating device.

6. The method of any of claims 1, 2, 3, 4, or 5, further comprising receiving, from the receiving device, a message comprising the request to send the data set, and
wherein the sending the data set is further in response to receiving the message from the receiving device.

7. The method of any of claims 1, 2, 3, 4, 5, or 6, further comprising receiving, in response to the sending, an invitation acceptance from the receiving device (514),
wherein the sending the data set is further in response to receiving the invitation acceptance, and
wherein the relationship end time is independent of a time of sending the invitation acceptance.

8. The method of any of claims 1, 2, 3, 4, 5, 6, or 7, wherein the indication of the relationship end time comprises a time duration after a time of the sending of the invitation.

9. The method of any of claim 1, 2, 3, 4, 5, 6, 7,or 8, wherein the indication of the relationship end time comprises a time of day.

10. A data communications device, comprising:
a data sharing processor (302), configured to:
send, to a receiving device, an invitation to share data within a data set, the data set being accessible to the data sharing processor, the invitation comprising an indication of a relationship end time (512); and
determine that a receipt of a request to send the data set occurs before the relationship end time (520); and
a data transmitter (320, 710, 720), communicatively coupled to the data sharing processor, configured to send the data set to the receiving device in response to a determination that the receipt of the request to send the data set occurs before the relationship end time (518).

11. The data communications device of claim 10, further comprising a data receiver (320, 712, 720), communicatively coupled to the data sharing processor and the data transmitter, the data receiver configured to receive, prior to the relationship end time, an indication to terminate a time limited data sharing relationship (522), and
wherein the data sharing processor is further configured to terminate, in response to receiving the indication to terminate the time limited data sharing relationship (524), and
wherein the data transmitter is further configured to send in further response to a determination that the time limited data sharing relationship is not terminated (518).

12. The data communications device of any of claims 10 or 11, wherein the data sharing processor is further configured to reject, in response to not determining the receipt of the request to send the data set occurs before the relationship end time, the request to send the data set to the receiving device.

13. The data communications device of any of claim 10, 11, or 12, further comprising a data receiver, communicatively coupled to the data sharing processor and the data transmitter, configured to receive, in response to the sending the invitation, an invitation acceptance from the receiving device (514), and
wherein the data transmitter is further configured to send the data set in further response to receiving the invitation acceptance (518).

14. The data communications device of any of claims 11, 12, or 13, wherein the data transmitter is configured to communicate with the receiving device via a peer-to-peer communications link, or
wherein the data sharing processor further configured to receive a user input indicating initiation of a time limited data sharing relationship, and
wherein the data transmitter is further configured to send the invitation to share data in further response to receiving the user input.

15. A computer program product for establishing a peer-to-peer, time limited data sharing relationship, the computer program product comprising machine readable code configured to execute the method set forth by any of claims 1, 2, 3, 4, 5, 6, 7, 8, 9, or 10.
